# EUROPEAN PATENT APPLICATION

(11) **EP 1 909 258 A2**
(43) Date of publication of application: **09.04.2008**
(21) Application number: 07110812.0
(22) Date of filing: 21.06.2007
(51) Int. Cl.: G09G 5/14, G09G 5/39

(54) **Off-screen buffering management device and method**

(30) Priority: 04.10.2006 KR 20060097687
(71) Applicant: Samsung Electronics Co., Ltd., Suwon-si, Gyeonggi-Do 442-742 (KR)
(72) Inventor: Park, Sang-jung, Seoul (KR)
(74) Representative: Davies, Robert Ean

(57) **Abstract**

An off-screen buffering management device and method are disclosed. In the device, an application unit (110) creates a window to be displayed on a screen, and makes a request for a drawing of the created window. An off-screen buffering area for storing off-screen data corresponding to the window is set in a back buffer (163), and a buffer manager (152) draws the window, if a request for drawing the window is made, in the set off-screen buffering area in the back buffer and stores the window.

## Description

Apparatuses and methods consistent with the present invention relate to off-screen buffering management, and more specifically, to off-screen buffering management, in which a region for displaying off-screen data of a window is set on a back buffer so that a copy count of off-screen data generated until the window is drawn in the back buffer can be reduced and buffering speed can be increased.

Since functional needs for multimedia have increased in recent years, an off-screen buffering management device that provides images by using Java applications is now being developed. In a case of using Java applications, the off-screen buffering management device provides a Graphic User Interface (GUI) created by a Java application to a display device.

In general, a GUI is expressed in a window frame. Therefore, in a case in which a Java application is drawn on a display device, the off-screen buffering management device creates an off-screen buffer for the window the Java application has used, generates off-screen data and graphic images the Java application itself has used, and stores them in a Video Random Access Memory (VRAM).

Later, the off-screen buffer of the window created by the off-screen buffering management device, the off-screen data generated by the Java application, and the graphic images stored in the VRAM are copied into a back buffer assigned to the VRAM.

When all necessary work for the creation of a GUI is complete and all the data are stored in the back buffer, the off-screen buffering management device copies all of the data stored in back buffer into a frame buffer at once, and the data copied into the frame buffer are displayed on a display device. As such, the technique for storing data that need to be output in a Java application in a back buffer and then transferring them to a frame buffer is called double buffering.

The reason for displaying the data having been stored in the off-screen buffer on a screen again through double buffering is to prevent a flash phenomenon which occurs when the GUI creation process is displayed on a screen or when only a part of the GUI is changed. Here, a related art off-screen buffering management device assigns an off-screen buffer to a main memory related to the operating system or a VRAM to temporarily store the result of a drawing work performed in Java applications.

However, in a case of using the off-screen buffer assigned to the main memory or the VRAM, the related art off-screen buffering management device has to repeatedly generate or delete the off-screen buffer every time the window was created or destroyed. In addition, in case of displaying many windows at the same time, the related art off-screen buffering management device requires the same number of off-screen buffers as the windows, thereby increasing the memory usage.

As an attempt to solve these problems, another conventional off-screen buffering management device assigns an off-screen buffer adequate for a window created the first time. Then, if a new window created additionally is bigger, it backs up the data being currently stored, deletes the old off-screen buffer to generate a new off-screen buffer to back up the data, and reloaded the previously backed up data. In this case, however, the related art off-screen buffering management device has to repeat the above procedure whenever a bigger size window was created. Such work has a substantial influence on the overall system performance.

It is, therefore, an aim of embodiments of the present invention to provide an off-screen buffering management device and method, in which a region for displaying off-screen data of a window is set on a back buffer so that a copy count of off-screen data generated until the window is drawn in the back buffer can be reduced and buffering speed can be increased.

According to an aspect of the present invention, there is provided an off-screen buffering management device, comprising: an application unit for creating a window to be displayed on a screen, and making a request for a drawing of the created window; a back buffer in which an off-screen buffering area for storing off-screen data corresponding to the window is set; and a buffer manager for drawing the window, if a request for drawing the window is made, in the set off-screen buffering area in the back buffer and storing the window.

The device may further comprise: a main memory for backing up the off-screen data stored in the back buffer, wherein the buffer manager backs up the off-screen data in the main memory if a request for hiding the off-screen data stored in the back buffer is made.

Preferably, if the off-screen buffering area of the window drawing of which is requested is not assigned in the back buffer, the buffer manager checks whether off-screen data of the window has been backed up in the main memory. If the off-screen data of the window has been backed up in the main memory, the buffer manager updates the backed up off-screen data to the back buffer.

Preferably, if the off-screen data of the window has not been backed up in the main memory, the buffer manager sets the off-screen buffering area in the back buffer and draws the off-screen data of the window in the set off-screen buffering area.

Preferably, the buffer manager stores location and size information of the off-screen buffer area set in the back buffer by the windows.

Preferably, if a request is made for displaying the window having been hidden upon request, the buffer manager reads the off-screen data out of the main memory, resets the off-screen buffering area in the back buffer by using the stored location and size information, and copies the read out off-screen data into the reset area.

Preferably, if a request is made for deleting the off-screen data stored in the back buffer, the buffer manager deletes the off-screen data stored in the off-screen buffering area assigned to the back buffer and the off-screen data stored in the main memory.

Preferably, if a request is made for deleting the off-screen data stored in the back buffer, the buffer manager deletes the off-screen data stored in the back buffer and the main memory.

Preferably, the application unit creates the window by using a Java language, and the back buffer is assigned to a VRAM.

Another aspect of the present invention provides an off-screen buffering management method, comprising: creating a window to be displayed on a screen, and making a request for a drawing of the created window. If the drawing is requested, the method includes setting an off-screen buffering area in a back buffer for storing off-screen data corresponding to the window, and drawing the window in the set off-screen buffering area and storing the window. If the drawing of the window is complete, the method includes copying the off-screen data having been stored in the off-screen buffering area into a frame buffer and displaying the window on the screen.

Preferably, the method further comprises: receiving a request for hiding the window having been drawn in the off-screen buffering area, and deleting the off-screen buffering area assigned to the buffer.

Preferably, the method further comprises: making a request for hiding the off-screen data having been stored in the off-screen buffering area, and backing up the off-screen data in a separate memory.

Preferably, the method further comprises: if a request for drawing the window is made, checking whether the off-screen buffering area has not been assigned to the back buffer. If not assigned, the method includes checking whether the off-screen data of the window has been backed up in the memory, and if backed up, resetting the off-screen buffering area in the back buffer, and storing the backed up off-screen data from the memory to the reset off-screen buffering area.

Preferably, if the off-screen data has not been backed up in the memory, the off-screen buffering area is set in the back buffer to thereby draw in the set off-screen buffering area the off-screen data of the window drawing of which is requested.

Preferably, the method further comprises: after a request for drawing the window is made, storing location and size information of the off-screen buffering area set in the back buffer by the windows.

Preferably, the method further comprises: making a request for displaying the window having been hidden upon request, and reading the off-screen data out of the main memory and copying the read out off-screen data into the off-screen buffering area assigned to the back buffer by using the stored location and size information.

Preferably, the method further comprises: if a request is made for deleting the off-screen data stored in the back buffer, deleting the off-screen data stored in the back buffer and the main memory.

Additional and/or other aspects of the present invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a block diagram of an off-screen buffering management device according to an exemplary embodiment of the present invention;
FIG. 2 is a flow chart describing a off-screen buffering management method implemented to the exemplary embodiment in FIG. 1;
FIG. 3 is a flow chart sequentially describing a process for hiding or deleting a first window upon request after the first window has been drawn in a GUI; and
FIG. 4 is a drawing roughly explaining a step-by-step process for drawing the window I by FIGS. 1 and 2.

An exemplary embodiment of the present invention will be described herein below with reference to the accompanying drawings.

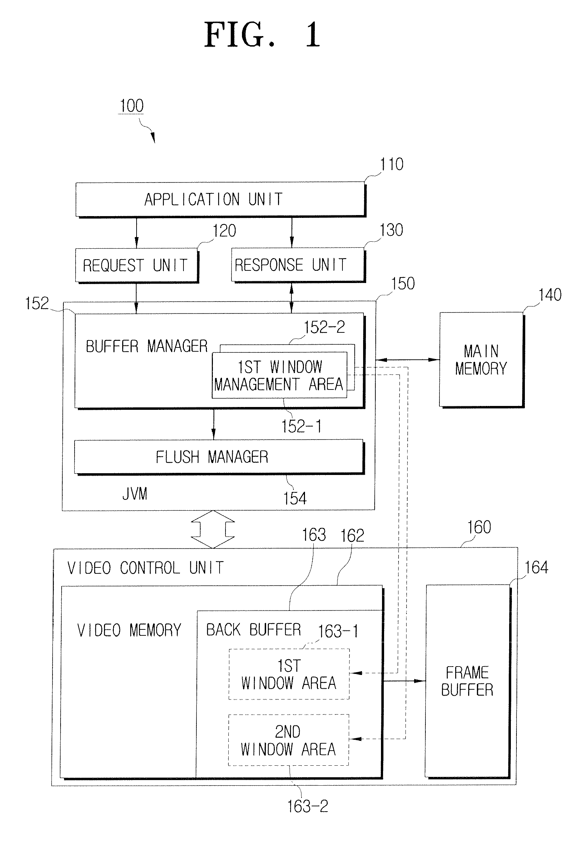

FIG. 1 is a block diagram of an off-screen buffering management device according to an exemplary embodiment of the present invention.

Referring to FIG. 1, the off-screen buffering management device 100 includes an application unit 110, a request unit 120, a response unit 130, a main memory 140, a Java Virtual Machine (JVM) 150, and a video control unit 160. The off-screen buffering management device 100 of the present invention is a part of the equipment connected to a display device for outputting images, and therefore creates a screen such as a GUI.

The application unit 110 creates a GUI to be displayed on a display device by using programming languages, draws the created GUI, and requests to hide or delete a previously created GUI(s). A GUI is largely composed of a window frame and images displayed in the window. In the description hereinafter, any description on images that are considered to obscure the invention in unnecessary detail will not be provided.

The application unit 110 creates a GUI by using a Java language for example. In such a case, the Java-based program is compiled into a Java bytecode by a Java compiler.

At this time, created GUI windows may be categorized into heavy-weight windows or light-weight windows, depending on the drawing method. The heavy-weight window is platform dependent because it is a window of the pattern provided by the platform base, while the light-weight window is a GUI window created in a desired pattern by a developer so it can be provided to another platform.

The request unit 120 transfers a request from the application unit 110 to the JVM 150, and the response unit 130 transfers a response in return from the JVM 150 to the application unit 110.

The main memory 140 is a volatile memory and is connected to the JVM 150, backing up off-screen data of windows under the control of a buffer manager 152 (to be described).

The JVM 150 operates as an interpreter for the Java bytecode compiled in the application unit 110. That is, the Java bytecode is interpreted in the JVM 150 to be executed. The JVM 150 includes the buffer manager 152 and a flush manager 154.

The buffer manager 152 handles a request from the application unit 110.

At first, when a GUI drawing is requested from the application unit 110, the buffer manager 152 creates windows management areas associated with GUI windows. The windows management areas 152-1 and 152-2 are created with respect to each GUI. That is, if there is a request for drawing another GUI, the buffer manager 152 creates a second windows management area 152-2.

In the following description of one exemplary embodiment of the present invention, the GUI window drawing which is requested will be referred to as the first window.

The first window management area 152-1 stores off-screen information of the first window that includes ID information of the window, size information, information on a first window off-screen buffer area (hereinafter, referred to as 'the first window area') 163-1 set in a back buffer 163 of a video memory 162, and the like, by a Java object.

Further, when a drawing request is made, the buffer manager 152 displays the first window area 163-1 storing the off-screen data of the first window on the back buffer 163 of the video memory 162. That is, the buffer manager 152 does not actually assign a first window off-screen buffer for drawing the off-screen data of the first window to the back buffer 163, but sets an area 163-1 as big as the first window in the back buffer 163 as shown in a dotted line.

When the first window area 163-1 setting is complete, the buffer manager 152 draws the off-screen data of the first window in the first window area 163-1.

In detail, when the application unit 110 makes a drawing request, the buffer manager 152 checks whether the off-screen information of the first window to be drawn is produced in the buffer manager 152. Here, the buffer manager 152 decides that the off-screen information of the first window has been produced if the Java object of the first window exists.

If the Java object of the first window does not exist, the buffer manager 152 creates a first window management area 152-1 in the buffer manager 152. Then, the buffer manager 152 sets in the video memory 162 the first window area 163-1 for storing the off-screen data of the first window.

On the other hand, if the off-screen information of the first window has been produced in the buffer manager 152, the buffer manager 152 checks whether the off-screen data of the first window has been backed up in the main memory 140. If the data has been backed up, the buffer manager 152 reads the first window out of the main memory 140. Next, the buffer manager 152 recreates the first window area 163-1, and draws and stores the first window, having been read out, in the first window area 163-1.

On the other hand, if the off-screen data of the first window has not been backed up in the main memory 140, the buffer manager 152 decides that the first window area 163-1 associated with a corresponding window exists, and draws the first window in the first window area 163-1.

In the meantime, if the application unit 110 makes a request for hiding a first window that was created previously, the buffer manager 152 backs up the first window stored in the first window area 163-1 into the main memory 140. The buffer manager 152 then deletes the first window area 163-1.

In addition, if the application unit 110 makes a request for deleting the first window that was created previously, the buffer manager 152 deletes all data related to the first window. Further, the buffer manager 152 deletes the data having been stored in the first window management area 152-1 of the JVM 150, the off-screen data of the first window having been stored in the first window area 163-1 of the back buffer 163, and the off-screen data of the first window having been backed up in the main memory 140.

The video control unit 160 processes a video signal into a signal displayable on the screen and provides it to a display device (not shown). The video control unit 160 includes the video memory 162 and a frame buffer 164.

The video memory 162 is a VRAM, and the back buffer 163 is assigned thereto.

The back buffer 163 stores all the necessary data for creating a GUI, and outputs all the data, upon request of the buffer manager 152, to the frame buffer 164 at once. The back buffer 163 outputs all the data at once because a flash phenomenon may occur in the display device (not shown) otherwise.

The flush manager 154 performs a flush if requested from the buffer manager 152, namely, copying the contents being currently stored in the back buffer 163 into the frame buffer 164. That is, the flush manager 154 performs the flush only if the buffer manager 152 requests it. Together with this, the data being copied into the frame buffer 164 are displayed in a GUI format on the display device (not shown).

According to an exemplary embodiment of the present invention, the buffer manager 152 does not buffer an area into which the off-screen data of a requested window drawing is stored, i.e., an area of the off-screen buffering, in the main memory 140 or the video memory 162, but directly draws the off-screen data in a partial area of the back buffer 163 that has been assigned to the video memory 162. In this manner, the off-screen data copy procedure can be shortened to thereby improve the drawing performance of Java applications.

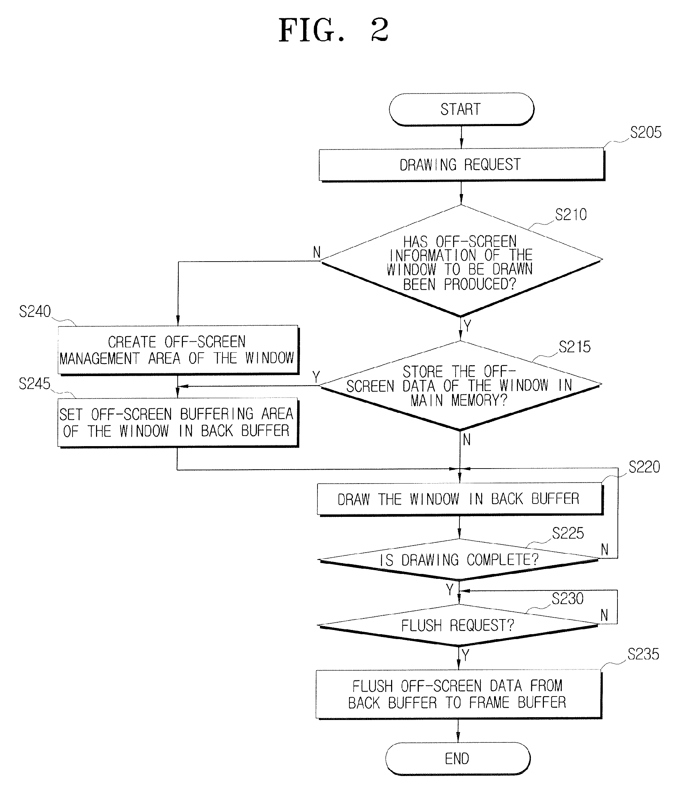

FIG. 2 is a flow chart describing an off-screen buffering management method implemented to the exemplary embodiment in FIG. 1.

Referring to FIGS. 1 and 2, when the application unit 110 makes a request for drawing a GUI (S205), the buffer manager 152 checks whether the off-screen data of the first window of the requested GUI drawing, or the object of the first window, has been produced (S210).

In S210, if the object of the first window exists, that is, if the first window management area 152-1 where the off-screen information of the first window is set exists, the buffer manager 152 then checks whether the off-screen data of the first window is being stored in the main memory 140 (S215).

If it turns out that the data is not stored in the main memory 140, the buffer manager 152 decides that the first window drawing which was requested is currently being displayed on the display device (not shown), and draws the first window in the predetermined first window area 163-1 (S220).

After it is determined that the drawing of the first window is complete (S225), if the buffer manager 152 requests a flush (S230), the flush manager 154 flushes the off-screen data of the first window being currently drawn in the first window area 163-1 of the back buffer 163 into the frame buffer 164 (S235). As such, a final GUI composed of the first window being moved into the frame buffer 164 is simultaneously displayed on the display device (not shown).

On the other hand, if it turned out in S210 that the first window management area 152-1 does not exist, the buffer manager 152 creates the first window management area 152-1 therein, produces the off-screen information from the Java object, and stores the information thus produced (S240). Here, the off-screen information of the first window includes ID information of the first window, size information, location of the first window area 163-1 set in the back buffer 163, and the like.

The buffer manager 152 sets the first window area 163-1 for use in drawing of the first window in the back buffer 163 (S245), and enters S220.

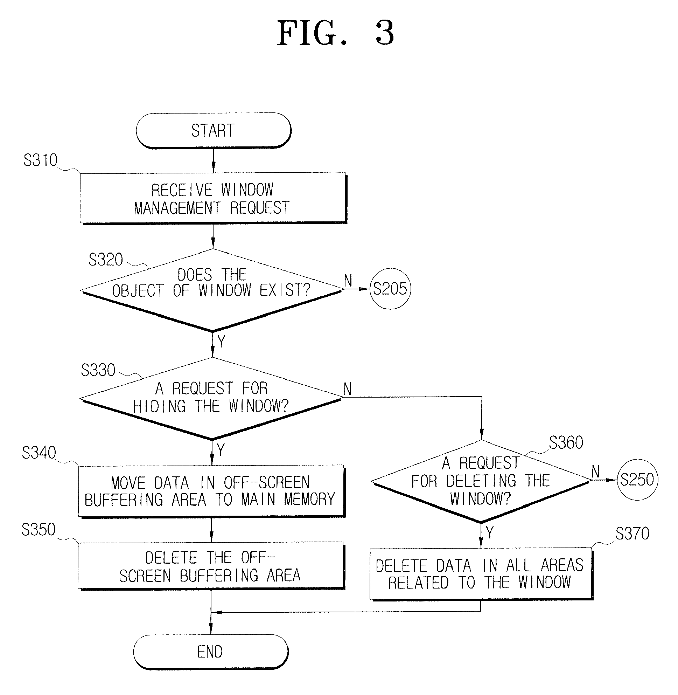

FIG. 3 is a flow chart sequentially describing a process for hiding or deleting the first window upon request after the first window has been drawn in a GUI.

Referring to FIGS. 1 to 3, when the application unit 110 makes a request for managing the first window, the buffer manager 152 checks whether the object of the first window exists (S310 and S320).

If the object of the first window exists in the buffer manager 152, that is, if the first window management area 152-1 exists, the buffer manager 152 checks whether the request made in S310 is a request for hiding the first window (S330).

If hiding the first window is indeed requested, the buffer manager 152 moves the off-screen data of the first window having been drawn in the first window area 163-1 to the main memory 140 to back up the data (S340).

Then, the buffer manager 152 deletes the first window area 163-1 (S350).

If hiding of the first window is not requested in S330, the buffer manager 152 checks whether deleting of the first window has been requested (S360).

If deleting the first window is indeed requested, the buffer manager 152 deletes the off-screen data of the first window having been drawn in the first window area 163-1 and deletes the first window area 163-1 (S370) as well. In addition, if the off-screen data of the first window is stored in the main memory 140, the buffer manager 152 also deletes the off-screen data of the first window in the main memory 140.

On the contrary, if it turns out in S320 that the object of the first window does not exist, the buffer manager 152 enters S205. Moreover, if the request made in step S360 is not a deletion request of the first window, the buffer manager 152 enters S250.

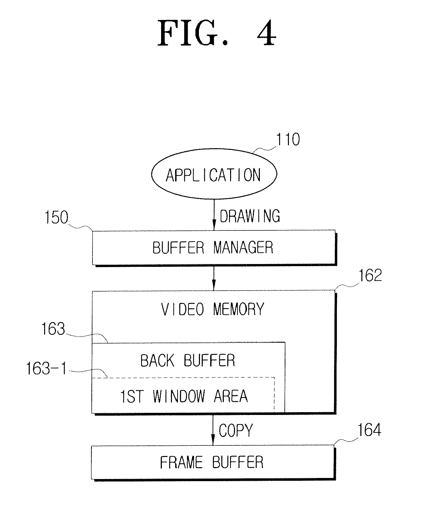

FIG. 4 is a drawing roughly explaining a step-by-step process for drawing the first window by FIGS. 1 and 2.

Referring to FIGS. 1 to 4, when the application unit 110 makes a request for drawing a GUI composed of the first window, the off-screen data of the first window is drawn in the first window area 163-1 of the back buffer 163.

When a flush is requested from the buffer manager 152, the complete GUI composed of the first window is copied into the frame buffer 164 and is displayed on the display device (not shown) at the same time. That is, according to an exemplary embodiment of the present invention, as the first window is promptly drawn in a designated area of the back buffer without going through the buffering process in the VRAM or the main memory, it is also promptly displayed on the display device (not shown).

In conclusion, the off-screen buffering management device and method of embodiments of the present invention can be used for shortening the off-screen data copy step and further for improving drawing performance in Java applications, by not assigning the off-screen buffer necessary for the creation of a GUI in the video memory but by setting an area in a part of the back buffer.

Moreover, according to exemplary embodiments of the present invention, the off-screen buffer is not practically assigned to the video memory, and thus the video memory usage can be increased even for a device with the limited video memory capacity.

Further, according to embodiments of the present invention, as the off-screen buffer is not practically assigned to the video memory, operations such as assignment and deletion of the memory buffer that may influence the system performance during the creation and deletion of the off-screen buffer are not carried out. In this manner, no matter how often the windows may be created and destroyed repeatedly, the system performance is not necessarily affected by that.

Although exemplary embodiments of the present invention have been described, it will be understood by those skilled in the art that the present invention should not be limited to the described exemplary embodiments, but various changes and modifications can be made within the spirit and scope of the present invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An off-screen buffering management device, comprising:
an application unit (110) operable to create a window to be displayed on a screen, and makes a request for a drawing of the created window;
a back buffer (163) in which an off-screen buffering area which stores off-screen data corresponding to the window is set; and
a buffer manager (152) operable to draw the window, if a request for drawing the window is made, in the set off-screen buffering area in the back buffer and store the window.

2. The device of claim 1 further comprising:
a main memory (140) in which the off-screen data stored in the back buffer is backed up, wherein the buffer manager (152) is operable to back up the off-screen data in the main memory if a request for hiding the off-screen data stored in the back buffer is made.

3. The device of claim 2, wherein if the off-screen buffering area is not assigned in the back buffer, the buffer manager is operable to check whether off-screen data of the window has been backed up in the main memory; and if the off-screen data of the window has been backed up in the main memory, the buffer manager is operable to update the backed up off-screen data to the back buffer.

4. The device of claim 2 or 3, wherein if the off-screen data of the window has not been backed up in the main memory, the buffer manager is operable to set the off-screen buffering area in the back buffer and draws the off-screen data of the window in the set off-screen buffering area.

5. The device of any of claims 2-4, wherein the buffer manager (152) is operable to store location and size information of the off-screen buffer area set in the back buffer by the windows.

6. The device of claim 5, wherein if a request is made for displaying a window hidden upon request, the buffer manager (152) is operable to read the off-screen data out of the main memory (140), reset the off-screen buffering area in the back buffer (163) by using the stored location and size information, and copy the read out off-screen data into the reset area.

7. The device of any of claims 2-6, wherein if a request is made for deleting the off-screen data stored in the back buffer (163), the buffer manager (152) is operable to delete the off-screen data stored in the off-screen buffering area assigned to the back buffer and the off-screen data stored in the main memory.

8. The device of any preceding claim, wherein if a request is made for deleting the off-screen data stored in the back buffer (163), the buffer manager (152) is operable to delete the off-screen data stored in the back buffer.

9. The device of any preceding claim, wherein the application unit (110) is operable to create the window by using a Java language.

10. The device of any preceding claim, wherein the back buffer (163) is assigned to a VRAM (Video Random Access Memory).

11. An off-screen buffering management method, comprising:
creating a window to be displayed on a screen, and making a request for a drawing of the created window;
if the drawing is requested, setting (S245) an off-screen buffering area in a back buffer for storing off-screen data corresponding to the window;
drawing (S220) the window in the set off-screen buffering area and storing the window; and
if the drawing of the window is complete, copying the off-screen data stored in the off-screen buffering area into a frame buffer and displaying the window on the screen.

12. The method of claim 11 further comprising:
receiving a request to hide the window drawn in the off-screen buffering area; and
deleting (S370) the off-screen buffering area assigned to the buffer.

13. The method of claim 11 or 12 further comprising:
making a request to hide the off-screen data stored in the off-screen buffering area; and
backing up the off-screen data in a memory.

14. The method of claim 13 further comprising:
if a request to draw the window is made,
checking whether the off-screen buffering area has been assigned to the back buffer;
if the off-screen buffering area has not been assigned to the back buffer, checking whether the off-screen data of the window has been backed up in the memory; and
if the off-screen data of the window has been backed up, resetting the off-screen buffering area in the back buffer, and storing the backed up off-screen data from the memory to the reset off-screen buffering area.

15. The method of claim 14, wherein if the off-screen data has not been backed up in the memory, the off-screen buffering area is set in the back buffer to thereby draw in the set off-screen buffering area the off-screen data.

16. The method of any of claims 13 - 15 further comprising:
if a request to draw the window is made, storing location and size information of the off-screen buffering area set in the back buffer by the windows.

17. The method of claim 16 further comprising:
making a request to display the window hidden upon request; and
reading the off-screen data out of the memory and copying the read out off-screen data into the off-screen buffering area assigned to the back buffer by using the stored location and size information.

18. The method of any of claims 13 - 17 further comprising:
if a request is made to delete the off-screen data stored in the back buffer, deleting the off-screen data stored in the back buffer and the memory.

19. The method of any of claims 11 - 18, wherein the application unit creates the window by using a Java language.

20. The method of any of claims 11 - 19, wherein the back buffer is assigned to a VRAM (Video Random Access Memory).
